# EUROPÄISCHE PATENTSCHRIFT

(11) **EP 0 520 989 B1**
(45) Veröffentlichungstag und Bekanntmachung des Hinweises auf die Patenterteilung: **30.03.1994**
(21) Anmeldenummer: 90913827.3
(22) Anmeldetag: 21.09.1990
(51) Int. Cl.: G06F 1/16

(54) **TRAGBARER COMPUTER**
PORTABLE COMPUTER
ORDINATEUR PORTATIF

(30) Priorität: 16.03.1990 DE 4008541
(43) Veröffentlichungstag der Anmeldung: 07.01.1993
(73) Patentinhaber: Siemens Nixdorf Informationssysteme Aktiengesellschaft, 33102 Paderborn (DE)
(72) Erfinder: BAITZ, Günter, D-1000 Berlin 27 (DE); BURCHART, Joachim, D-4797 Schlangen 2 (DE)
(74) Vertreter: Fuchs, Franz-Josef, Dr.-Ing.
(86) Internationale Anmeldenummer: EP9001610
(87) Internationale Veröffentlichungsnummer: WO9114221

(56) Entgegenhaltungen:
- FR-A- 2 606 609
- US-A- 4 839 837
- US-A- 4 859 092

## Beschreibung

Die Erfindung betrifft einen tragbaren Computer (PC) im Laptop-Format entsprechend dem Oberbegriff des Anspruches 1.

Mit der zunehmenden Miniaturisierung ist es vor Jahren zunächst gelungen, leistungsfähige Computer als Auftisch-Geräte bzw. Untertisch-Geräte herzustellen, so daß sie als eigenständige Geräte am Arbeitsplatz eines Benutzers aufgestellt werden konnten; derartige Computer wurden als Personal Computer (PC) bezeichnet. Die weitere Entwicklung brachte eine weitere Reduzierung der Abmessungen und des Gewichtes der Personal Computer, so daß sie als sogenannte Portables in tragbaren Koffern untergebracht werden konnten. Die jüngste Entwicklung sind sogenannte Laptops; darunter versteht man Personal Computer im Aktentaschenformat und mit geringem Gewicht, die in Bereichen einsetzbar sind, in denen sie bisher wegen zu großer Abmessungen und zu großen Gewichtes noch nicht einsetzbar waren.

Ein großer Mangel bisher bekannter Computer im Laptop-Format wird darin gesehen, daß sie keine oder nur wenig leistungsfähige Drucker haben. Insbesondere ist es bisher nicht gelungen, in einen Laptop-Computer einen Drucker zu integrieren, welcher beispielsweise das im modernen Geschäftsverkehr übliche DIN-A4-Format bedrucken kann. Bei den meisten Laptop-Computern besteht deshalb nur die Möglichkeit, einen herkömmlichen Drucker anzuschließen, was die Einsatzmöglichkeit des Computers als mobiles Gerät stark beeinträchtigt.

Es ist auch bereits ein tragbarer Computer der im Oberbegriff des Anspruches 1 genannten Art bekannt, in den ein Drucker direkt integriert ist (EPSON HX-20). Bei diesem bekannten Gerät sind die Eingabetastatur, der Bildschirm und die Druckeranordnung in einem Basisgehäuse zusammengefaßt, wobei der vordere, dem Benutzer zugewandte Teil der Geräteoberseite von der Eingabetastatur eingenommen wird, während ein Drucker, ein Bildschirm und eine Mikrokassettenstation im hinteren Bereich des Basisgehäuses nebeneinanderliegend angeordnet sind. Bei dieser Anordnung steht für jede der letztgenannten Komponenten jeweils nur etwa ein Drittel der Gerätebreite zur Verfügung. Der bei dem bekannten Laptop-Computer eingesetzte Drucker hat deshalb nur eine Zeilenbreite von 24 Zeichen, so daß er für einen großen Teil der von einem Computer zu lösenden Aufgaben, insbesondere für eine Textverarbeitung, nicht verwendbar ist.

Es ist weiterhin aus der US-A-4 859 092 ein tragbarer Computer im Laptop-Format bekannt, der ein Basisgehäuse mit einer Eingabetastatur, einen Bildschirm und eine Druckeranordnung aufweist. Der Computer weist ein um zwei Achsen verschwenkbares Display auf, wobei in einer ersten Schwenklage des Displays die Tastatur und in einer zweiten Schwenklage der Drucker freigegeben wird. In einer Transportposition deckt das Display die Tastatur ab.

Es ist die Aufgabe der vorliegenden Erfindung, einen tragbaren Computer im Laptop-Format der im Oberbegriff des Anspruches 1 genannten Art zu schaffen, welcher im wesentlichen die Leistungsfähigkeit herkömmlicher Personal Computer hat, wobei er insbesondere auch in der Lage sein soll, Papier im gebräuchlichen DIN-A4-Format oder ähnlichen Formaten, Formulare und dergleichen zu bedrucken.

Diese Aufgabe wird erfindungsgemäß durch die Merkmale des Anspruches 1 gelöst.

Während bei den bekannten Lösungen dem Drucker der Raum zugewiesen wird, welcher bei im wesentlichen vorgegebener Gesamtgröße des Gerätes (Aktentaschenformat) nach Unterbringung der Eingabetastatur, des Bildschirmes sowie gegebenenfalls weiterer Komponenten noch übrig bleibt, wird gemäß der vorliegenden Erfindung das Basisgehäuse zunächst in erster Linie an die Druckaufgaben angepaßt, indem eine der Hauptabmessungen des Basisgehäuses, vorzugsweise seine Breite, im wesentlichen vollständig für die Breite des Transportkanals ausgenutzt wird, so daß dieser Breite entsprechende Formate bedruckbar sind. Durch die gewählte Anordnung des Transportkanals ist eine Auflagefläche für den Druckträger verwirklicht, die im wesentlichen mit der Grundfläche des Basisgehäuses übereinstimmt. Die Druckeranordnung ist demnach als Flachbettdrucker ausgebildet, welcher sich in Verbindung mit einem geeigneten Druckkopf hervorragend zum Bedrucken von Formularen, zum Anfertigen von Durchschlägen usw. eignet.

Die erfindungsgemäße Anordnung erlaubt es, einen leistungsfähigen Drucker im Basisgehäuse unterzubringen und dessen Abmessungen so kompakt zu halten, daß die Eingabetastatur und/oder der Bildschirm als vom Basisgehäuse getrennte Einheiten bei einer Außerbetriebsstellung an das Basisgehäuse angelegt werden können, ohne daß die im wesentlichen vorgegebenen Gesamtabmessungen des Laptop-Formates überschritten werden. Diese Konfiguration entspricht der Transportkonfiguration. Für den Einsatz werden die Eingabetastatur und der Bildschirm in eine Betriebsstellung gebracht.

Gemäß einer bevorzugten Ausgestaltung der Erfindung ist vorgesehen, daß die Eingabetastatur zwischen einer auf dem Basisgehäuse aufliegenden Außerbetriebsstellung und einer an dessen vorderer Bedienungsseite vor dem Basisgehäuse angeordneten Betriebsstellung schwenkbar am Basisgehäuse gelagert ist. Die Abmessungen der Eingabetastatur sind so gewählt, daß diese bei der Außerbetriebsstellung der Eingabetastatur über den Grundriß des Basisgehäuses nicht übersteht; gleichzeitig ist die eigentliche Tastatur bei ihrer Außerbetriebsstellung geschützt, da die Tastenseite auf der Oberseite des Basisgehäuses aufliegt.

In ähnlicher Weise ist erfindungsgemäß das Bildschirmgehäuse mit dem Bildschirm zwischen einer auf dem Basisgehäuse aufliegenden Außerbetriebsstellung und einer hochgeklappten Betriebsstellung schwenkbar. Die Anordnung ist so getroffen, daß bei der Außerbetriebsstellung die eigentliche Bildschirmfläche auf dem Gehäuse aufliegt, so daß er in seiner Transportkonfiguration wirksam geschützt ist;seine Abmessungen sind vorzugsweise so gewählt, daß er in seiner Außerbetriebsstellung über den Grundriß des Basisgehäuses nicht übersteht.

In weiterer Ausgestaltung der Erfindung ist vorgesehen, daß die Eingabetastatur und/oder der Bildschirm vom Basisgehäuse abnehmbar und unabhängig von diesem aufstellbar ausgebildet sind, wobei sie jeweils über ein Verbindungskabel mit dem Basisgehäuse lösbar verbunden sind. Damit besteht die Möglichkeit, die Druckeranordnung auch ohne die Eingabetastatur und den Bildschirm als selbständigen Drucker zu verwenden. Dieser Aufgabe dient auch ein weiteres, später genauer erläutertes Merkmal, nach welchem die elektrischen und/oder elektronischen Bauteile für den Computerteil des Gerätes als eigener Einschub in das Basisgehäuse einsetzbar ist; dieser Einschub kann bei einer Verwendung der Druckeranordnung als selbständiger Drucker fortgelassen werden.

Es ist aber auch möglich, nur die Eingabetastatur oder nur den Bildschirm vom Basisgerät abzukoppeln und insbesondere im Heim- oder Bürobetrieb durch höherwertige Geräte zu ersetzen.

Der Transportkanal hat dann vorzugsweise eine im wesentlichen sich über die ganze Breite des Basisgehäuses erstreckende Breite, so daß die Breitenabmessungen des Basisgehäuses weitgehend ausgenutzt werden. Die Breite des Transportkanals beträgt erfindungsgemäß wenigstens etwa 21 cm, was der Breite eines hochkant liegenden DIN-A4-Formates entspricht.

Gemäß einer bevorzugten Ausgestaltung der Erfindung ist die Druckeranordnung ein Nadeldrucker mit einem quer zur Transportrichtung des Druckträgers beweglich gelagerten Nadeldruckkopf. Derartige Nadeldruckköpfe ermöglichen das Schreiben von Durchschlägen, das Beschreiben von mehrlagigen Formularen usw.

Das Basisgehäuse ist vorzugsweise in der Transportebene des Druckträgers geteilt, so daß sich ein unteres Gehäuseteil und ein auf das untere Gehäuseteil aufsetzbarer, bzw. von diesem abhebbarer Gehäuseaufsatz ergibt, wobei das untere Gehäuseteil eine erste Gruppe von Funktionsbauteilen mit dem in Druckzeilenrichtung verfahrbaren Druckkopf, unteren Druckträger-Transportrollen und einer Farbbandanlage, jeweils mit ihren Antriebseinrichtungen, aufnimmt und im oberen Gehäuseaufsatz eine zweite Gruppe von Funktionsbauteilen mit einem Druckwiderlager und mit oberen Widerlagern für die unteren Transportrollen angeordnet ist. Diese Teilung ermöglicht in besonders günstiger Weise einen Zugang zu einzelnen Funktionsbauteilen für den Service-Fall, bzw. zum Papiertransportkanal für den Fall eines Papierstaus. Selbstverständlich besteht auch die Möglichkeit, den Druckkopf im Gehäuseaufsatz und das Druckwiderlager im hinteren Gehäuseteil unterzubringen.

Die Widerlager für die unteren Transportrollen sind vorzugsweise als obere Transportrollen ausgebildet, wobei den unteren und oberen Transportrollen jeweils Kupplungsmittel zugeordnet sind, die beim Aufsetzen des Gehäuseaufsatzes miteinander in Kupplungseingriff kommen.

Eine wesentliche Maßnahme zur Verringerung der Bauhöhe des Basisgehäuses ist, daß im unteren Gehäuseteil eine elektrische bzw. elektronische Antriebs- und Steuerungsmodulanordnung für den Drucker vorgesehen ist, mit der im wesentlichen alle elektrischen und elektronischen Funktionsbauteile des Druckers steckverbunden sind. Dadurch ergibt sich eine sehr kompakte Anordnung dieser Funktionsbauteile und es wird eine Voraussetzung für eine besonders flachbauende Anordnung geschaffen, wie anhand eines Ausführungsbeispiels weiter hinten genauer beschrieben wird. Außerdem entfallen durch die direkten Steckverbindungen der Funktionsbauteile mit der Antriebs- und Steuerungsmodulanordnung Kabelverbindung zwischen den Funktionsbauteilen einerseits und zwischen diesen und der Antriebs- und Steuerungsmodulanordnung andererseits, so daß auch die Montage und eventuelle Service-Arbeiten erheblich erleichtert werden.

Als weitere wesentliche Maßnahme zur Erzielung einer flachen Bauweise ist vorgesehen, daß die Farbbandkassette auf die Oberseite des unteren Gehäuseteils flach auflegbar ist, derart, daß ihre flache Oberseite mit der Grundfläche des Transportkanals bündig ist; durch diese Anordnung fügt sich die Farbbandkassette in idealer Weise auch in ein flaches Basisgehäuse ein. Außerdem erfüllt die Farbbandkassette eine zusätzliche Aufgabe, indem sie als Auflagetisch für den Druckträger dient, so daß ein gesonderter Auflagetisch nicht erforderlich ist, was zu einer Reduzierung der Bauhöhe ausgenutzt werden kann.

Gemäß einer Ausgestaltung der Erfindung ist die Oberseite des unteren Gehäuseteils durch eine im wesentlichen in der Druckträgerebene liegende Deckplatte gebildet, die einen vertieften Bereich zur Aufnahme der Farbbandkassette aufweist; die Deckplatte ist mit Durchbrechungen für den Druckkopf, für in Einzugsrichtung des Druckträgers vor bzw. hinter dem Druckkopf liegende untere Transportrollen, für den Transportrollen zugeordnete Kupplungsmittel und für wenigstens einen Antriebszapfen für die Farbbandkassette versehen. Dabei ist erfindungsgemäß die Durchbrechung für den Druckkopf, die durch einen wenigstens über die Druckzeilenbreite sich erstreckenden Schlitz gebildet ist, in einem in Einzugsrichtung des Druckträgers hinteren, durch die eingelegte Farbbandkassette nicht abgedeckten Teil des vertieften Bereiches angeordnet. Die Durchbrechungen für die vor dem Druckkopf liegenden Transportrollen sind erfindungsgemäß in einem durch die eingelegte Farbbandkassette abgedeckten Bereich der Vertiefung angeordnet, wobei die Farbbandkassette selbst dann auch mit Durchbrechungen für den Durchtritt dieser Transportrollen versehen ist.

In weiterer Ausgestaltung der Erfindung ist vorgesehen, daß die Farbbandkassette mit bezüglich der Einzugsrichtung des Druckträgers seitlichen Führungsstegen für die Seitenführung des Druckträgers ausgestattet ist, wobei diese seitlichen Führungsstege jeweils mit entsprechenden, auf dem nicht vertieften Bereich der Deckplatte angeordneten Seitenstegen fluchten.

Der Gehäuseaufsatz ist gemäß einer Ausgestaltung der Erfindung um eine quer zur Einzugsrichtung des Druckträgers und parallel zur Druckträgerebene liegende Schwenkachse schwenkbar mit dem unteren Gehäuseteil verbunden; es sind Federmittel vorgesehen, durch die der Gehäuseaufsatz in seine auf dem unteren Gehäuseteil aufliegende Stellung vorbelastet ist. Durch die Federmittel werden die oberen Widerlager für die unteren Transportrollen mit einer bestimmten, vorgegebenen Kraft an die unteren Transportrollen bzw. an einen Druckträger angelegt, wobei unterschiedliche Dicken des Druckträgers automatisch durch die sich ergebenden unterschiedlichen Einstellungen des Gehäuseaufsatzes berücksichtigt werden.

Wie bereits weiter vorne beschrieben wurde, ist die Antriebs- und Steuerungsmodulanordnung für den Drucker als über dem Boden des unteren Gehäuseteils angeordnete flache Schaltungsplatine ausgebildet. Sie nimmt vorzugsweise nur einen Teil des Basisgehäuses ein, so daß das Basisgehäuse auch Platz für die elektrischen und/oder elektronischen Komponenten des Computerteils bietet. Erfindungsgemäß ist vorgesehen, daß in den unteren Gehäuseteil ein Einschub mit den elektrischen und/oder elektronischen Bauteilen des Computerteils einschiebbar ist, die einerseits mit der Antriebs- und Steuerungsmodulanordnung des Druckers und andererseits mit der Eingabetastatur, dem Bildschirm sowie gegebenenfalls mit zugeordneten Peripheriegeräten verbindbar sind. Der Einschub ist vorzugsweise in eine in der Rückseite des Basisgehäuses angeordnete Einschuböffnung einschiebbar. Gemäß einer bevorzugten Ausgestaltung der Erfindung umfaßt der Einschub einen im Längsschnitt im wesentlichen L-förmigen Support mit einer Bodenwand und einer die Einschuböffnung verschließenden Rückwand, wobei die Bodenwand in an den Seitenwänden des Basisgehäuses ausgebildete Führungsschienen einschiebbar ist. Der Einschub trägt eine oder mehrere im wesentlichen zur Bodenwand parallele Schaltungsplatinen, die auf die Innenseite der mit Ausgangssteckern bestückten Rückwand aufsteckbar sind, wobei an der der Rückwand abgewandten Platinenkante jeweils Randkontakte angeordnet sind, welche beim Einschieben des Einschubes mit im Basisgehäuse angeordneten Steckverbindern gekuppelt werden, die wiederum eine Verbindung zur Antriebs- und Steuerungsmodulanordnung des Druckers, zur Eingabetastatur und zum Bildschirm herstellen.

Weitere Einzelheiten, Vorteile und Merkmale ergeben sich aus der folgenden Beschreibung und der Zeichnung, auf die bezüglich der Offenbarung aller nicht im Text beschriebenen Einzelheiten ausdrücklich verwiesen wird. Es zeigen:
- Fig. 1: eine perspektivische, teilweise geschnittene Darstellung eines Basisgehäuses mit der Druckeranordnung bei angehobenem Gehäuseaufsatz und geöffnetem Gehäusedeckel;
- Fig. 2: eine perspektivische Darstellung eines tragbaren Computers unter Verwendung eines Basisgehäuses gemäß der Fig. 1, mit in Arbeitsstellung befindlicher Eingabetastatur- und Bildschirmeinheit;
- Fig. 3: eine perspektivische Darstellung des Computers gemäß Fig. 2 mit in Außerbetriebsstellung befindlicher Eingabetastatur- und Bildschirmeinheit;
- Fig. 4: eine perspektivische Darstellung des Computers gemäß Fig. 2 in einer Rückansicht;
- Fig. 5: schematisch einen Längsschnitt durch einen Computer gemäß Fig. 2 entlang der Schnittlinie V-V.

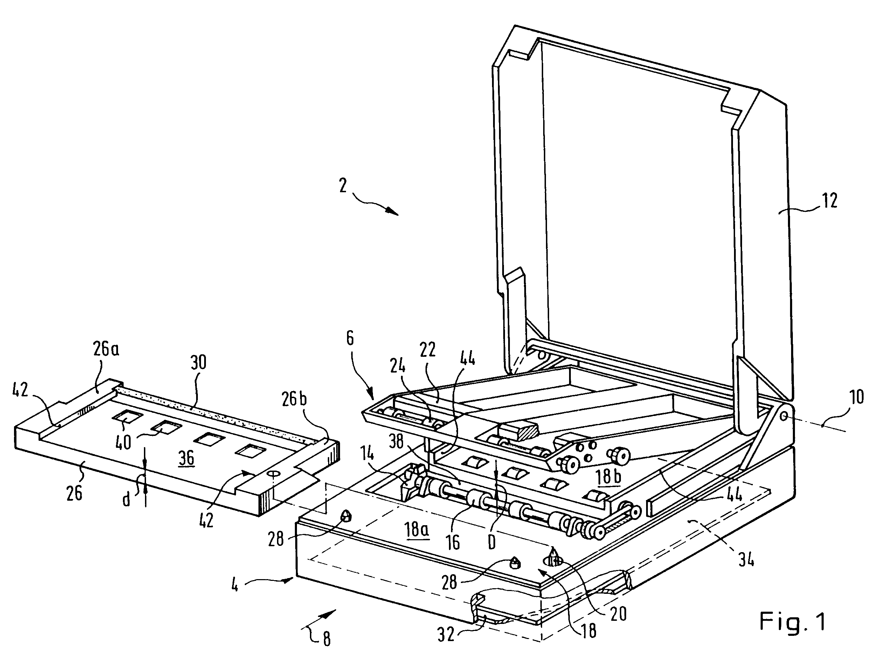

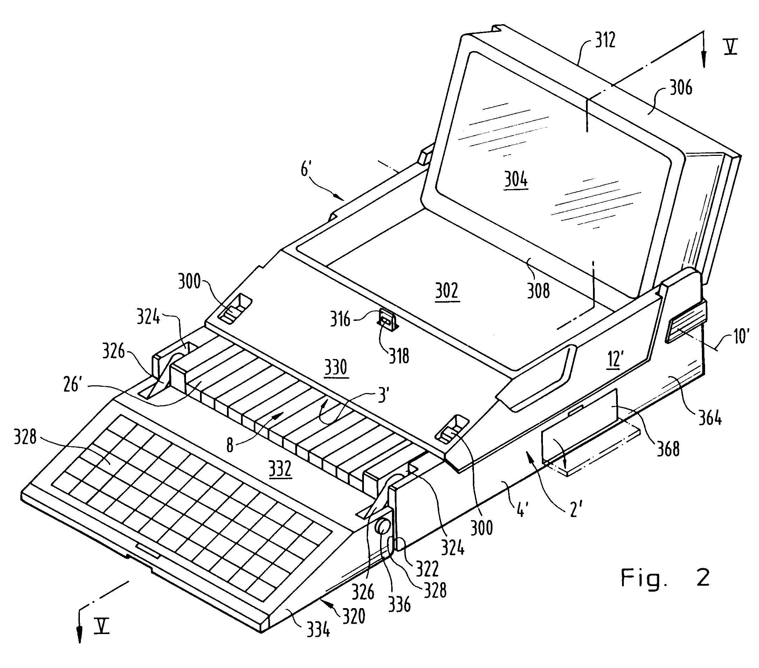

Zur Erleichterung des Verständnisses wird in Fig. 1 zunächst das Basisgehäuse 4 mit dem darin angeordneten Drucker 2 ohne Eingabetastatur und Bildschirm gezeigt; die in Fig. 1 dargestellte Anordnung kann auch als selbständiger Drucker verwendet werden. Der Gehäusedeckel 12 hat dann eine einfache haubenartige Form und weist nicht die beim Gehäusedeckel 12' der Fig. 2 vorgesehene Mulde zur Aufnahme des Bildschirmes 312 auf.

Das in Fig. 1 dargestellte, den Drucker 2 aufnehmende Basisgehäuse umfaßt im wesentlichen einen unteren Gehäuseteil 4 sowie einen auf diesen aufsetzbaren bzw. von diesem abhebbaren Gehäuseaufsatz 6. Die Trennungsebene zwischen dem unteren Gehäuseteil 4 und dem Gehäuseaufsatz 6 fällt im wesentlichen mit der Druckträgerebene zusammen, d.h. mit der Ebene, in der ein Druckträger durch das Basisgehäuse transportiert wird. Der Gehäuseaufsatz 6 ist am unteren Gehäuseteil 4 um eine quer zur Einzugsrichtung 8 eines Druckträgers und parallel zur Druckträgerebene liegende Schwenkachse 10 schwenkbar gelagert. Der Transportkanal 3 ist zwischen unterem Gehäuseteil 4 und Gehäuseaufsatz 6 ausgebildet.

Ein ebenfalls um die Schwenkachse 10 schwenkbar am unteren Gehäuseteil 4 angeordneter Deckel 12 dient dazu, die Druckeranordnung bei auf dem unteren Gehäuseteil 4 aufliegendem Gehäuseaufsatz 6 abzudecken und zu verschließen.

Der untere Gehäuseteil 4 nimmt die Antriebs- und Steuerungselektronik sowie die damit verbundenen aktiven Funktionsbauteile des Druckers auf, wie den quer zur Einzugsrichtung 8 in Zeilenrichtung verfahrbaren Druckkopf 14, untere Transportrollen 16 für den Druckträgertransport sowie Antriebsmittel für den Farbbandtransport, von denen in Fig. 1 nur ein durch die Deckplatte 18 hindurch ragender Antriebszapfen 20 dargestellt ist.

Der Gehäuseaufsatz 6 nimmt bei der in Fig. 1 dargestellten Basisausstattung des Druckers im wesentlichen nur inaktive Bauteile auf, nämlich das sich über die ganze Druckzeilenlänge erstreckende Druckwiderlager 22 sowie obere Transportrollen 24, die über noch zu beschreibende Kupplungsmittel mit den unteren Transportrollen 16 antriebsverbunden sind.

Wie Fig. 1 erkennen läßt, hat die Deckplatte 18 einen in Einzugsrichtung 8 vorderen, vertieften Bereich 18a und einen hinteren, demgegenüber höher liegenden Bereich 18b. Auf die Vertiefung bzw. den vertieften Bereich 18a der Deckplatte 18 wird die Farbbandkassette 26 flach aufgelegt, wobei zwei aus der Deckplatte 18 vorstehende Zentrierzapfen 28 in zwei nicht dargestellte Zentrierlöcher der Farbbandkassette 26 eingreifen und diese lagerichtig ausrichten und halten. Der mit einem Farbbandantrieb verbundene Antriebszapfen 20 wird mit innerhalb der Farbbandkassette 26 angeordneten Transportrollen verbunden, die in bekannter und deshalb nicht näher beschriebener Weise den Farbbandtransport bewirken. Die Farbbandkassette 26 hat in ebenfalls bekannter Weise zwei nach vorne vorstehende Arme 26a und 26b, zwischen denen sich das Farbband 30 außerhalb der Farbbandkassette 26 frei spannt. Bei auf die Deckplatte 18 aufgelegter Farbbandkassette 26 verläuft das über geeignete Umlenkmittel in die Schreibebene gedrehte Farbband 30 entlang der Bewegungsbahn des Druckkopfes 14, so daß ein zwischen dem Farbband 30 und dem Druckwiderlager 22 befindlicher Druckträger bedruckt werden kann.

Der Boden 32, welcher zumindest den vorderen Teil des unteren Gehäuseteils 4 von unten abdeckt, ist abnehmbar. Dadurch ist die über dem Boden 32 angeordnete, die Antriebs- und Steuerungselektronik aufnehmende Schaltungsplatine 34 von unten her gut zugänglich. Die Dicke d der Farbbandkassette entspricht dem Maß D, um welches der Bereich 18a der Deckplatte 18 gegenüber dem Bereich 18b vertieft ist. Bei auf die Deckplatte 18 aufgelegter Farbbandkassette 26 ist deren Oberseite 36 demnach mit dem Bereich 18b der Deckplatte 18 bündig und dient als Auflagefläche für einen in den Drucker einzuziehenden Druckträger.

Im Bereich des Übergangs vom vertieften Bereich 18a zum erhöhten Bereich 18b der Deckplatte 18 ist eine Durchbrechung 38 vorgesehen, durch die die Mündung des Druckkopfes 14 hindurchragt. Die Durchbrechung 38 hat die Form eines sich wenigstens über die Druckzeilenlänge erstreckenden Schlitzes. Die Abmessungen der Farbbandkassette 26 sind so, daß sie den Bereich der Durchbrechung, durch den die Mündung des Druckkopfes 14 hindurchragt, nicht überdeckt, so daß der Druckkopf Zugang zu dem über die Durchbrechung 38 hinweg transportierten Druckträger hat. Für die vor dem Schreibbereich liegenden unteren Transportrollen 16 können eigene Durchbrechungen vorgesehen sein. Wie Fig. 1 erkennen läßt, ist die Durchbrechung 38 jedoch im vorliegenden Ausführungsbeispiel so groß, daß auch diese unteren Transportrollen 16 durch die Durchbrechung 38 nach oben hindurchragen. Da der in Einzugsrichtung 8 hintere Teil der Farbbandkassette 26 den Bereich der Durchbrechung 38, durch den die unteren Transportrollen hindurchragen, abdeckt, sind in der Farbbandkassette 26 Durchtrittsöffnungen 40 ausgebildet, durch die die unteren Transportrollen 16 noch um ein geringes Maß hindurchgreifen, so daß sie in Transporteingriff mit einem auf der Oberseite 36 der Farbbandkassette 26 liegenden Druckträger gelangen können.

Die Farbbandkassette 26 ist mit seitlichen Führungsstegen 42 für die Seitenführung eines auf der Oberseite 36 aufliegenden Druckträgers versehen, die sich in dem erhöhten Bereich 18b zugeordneten Seitenführungen 44 fortsetzen.

Wie in Fig. 1 zu erkennen ist, ist die Durchbrechung 38 auf ihrer in Fig. 1 linken Seite über die Druckzeilenlänge hinaus verlängert, so daß der Druckkopf 14 in eine Ruheposition fahren kann, die außerhalb der durch die Seitenführungen 42 bzw. 44 definierten Druckträgerbreite liegt. Die Durchbrechung 38 ist im Bereich der Ruheposition erweitert, so daß der Druckkopf 14 zu Servicezwecken leicht zugänglich ist.

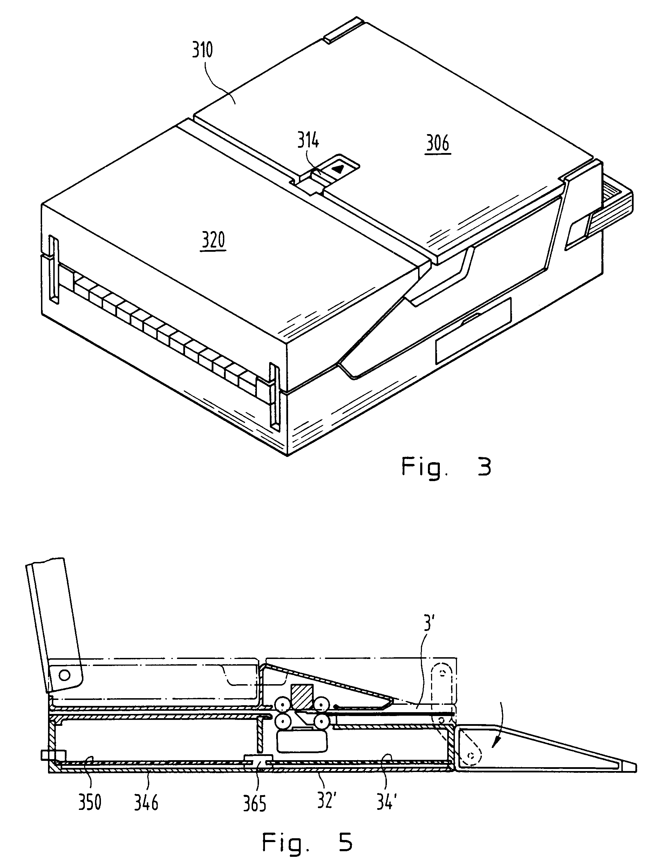

Die Figuren 2 bis 5 zeigen jeweils einen kompletten Computer gemäß der Erfindung unter Verwendung eines Basisgehäuses und Druckers gemäß Fig. 1; wie Fig. 2 erkennen läßt, ist der Gehäusedeckel 12' in seinem hinteren Bereich höher ausgeführt als der Gehäusedeckel 12 in Fig. 1 und ist mit einer Mulde 302 zur Aufnahme des Bildschirmgehäuses 306 in dessen Außerbetriebsstellung (s. Fig. 3) versehen.

Der in Fig. 2 dargestellte Computer umfaßt unter anderem einen in einem Basisgehäuse aufgenommenen Drucker 2' gemäß Fig. 1 mit einem unteren Gehäuseteil 4' sowie einem auf diesen aufsetzbaren bzw. von diesem abhebbaren Gehäuseaufsatz 6', der in Fig. 2 nicht zu erkennen ist, da er durch einen Gehäusedeckel 12' abgedeckt ist. Die Trennungsebene zwischen dem unteren Gehäuseteil 4' und dem Gehäuseaufsatz 6' fällt im wesentlichen mit der Druckträgerebene zusammen, d.h. mit der Ebene, in der ein Druckträger transportiert wird. Der Gehäuseaufsatz 6' ist am unteren Gehäuseteil 4' um eine quer zur Einzugsrichtung 8 eines Druckträgers und parallel zur Druckträgerebene liegende Schwenkachse 10' schwenkbar gelagert. Der Transportkanal 3' ist zwischen dem unteren Gehäuseteil 4' und dem Gehäuseaufsatz 6' ausgebildet.

Der ebenfalls um die Schwenkachse 10' schwenkbar am unteren Gehäuseteil 4' angeordnete Deckel 12' dient dazu, den Drucker 2' bei auf dem unteren Gehäuseteil 4' aufliegendem Gehäuseaufsatz 6' abzudecken und zu verschließen. Der Deckel 12' ist mit dem unteren Gehäuseteil 4' mittels Riegeln 300 verriegelbar. Der innere Aufbau des Druckers ist anhand der Fig. 1 beschrieben und bedarf deshalb keiner nochmaligen Erläuterung.

In der Oberseite des Deckels 12' befindet sich eine muldenförmige Ausnehmung 302, die der Aufnahme eines einen flachen Bildschirm 304 enthaltenden Gehäuses 306 in Transportstellung des PC's (Fig. 3) dient. Das Bildschirmgehäuse 306 ist im Bereich seiner Unterkante 308 ebenfalls um die Schwenkachse 10' schwenkbar gelagert. In der Außerbetriebsstellung ist das Bildschirmgehäuse 306 mittels eines an seiner Hinterwand 310 nahe der Gehäusevorderkante 312 angeordneten weiteren Riegels 314 mit dem Deckel 12' verriegelbar. Der Riegel 314 durchgreift in seiner Verriegelungsstellung einen Durchbruch 318 in einer Riegelfalle 316. Mit ihm wird auch das Eingabetastaturgehäuse 320 in seiner Außerbetriebsstellung (Fig. 3) gehalten.

Das Eingabetastaturgehäuse 320 hat eine zum Benutzer hin abfallende Pultform. Es ist mit seiner Hinterwand 322 über rechts und links von der Farbbandkassette 26' in Ausschnitte 324 im unteren Gehäuseteil 4' eingreifende Lenker 326 schwenkbar verbunden. Der Schwenkbereich ist derart, daß das Tastaturgehäuse 320 in Betriebsstellung (Fig. 2) vor dem Gehäuseunterteil 4' steht, wobei seine Hinterwand 322 beispielsweise unmittelbar vor der Vorderwand 328 und parallel zu dieser liegt. In der Außerbetriebsstellung liegt das Tastaturgehäuse 320 hingegen auf dem Drucker 2' auf, und zwar derart, daß die Tastenfläche 328 dem pultförmigen Vorderteil 330 des Deckels 12' zugewandt ist, während die Oberseite 332 des Tastaturgehäuses 320 die Farbbandkassette 26' überdeckt (Fig. 3).

Das Tastaturgehäuse 320 ist mittels Druck auf in deren Seitenwänden 334 angeordnete Entriegelungstasten 336 von den Lenkern 326 lösbar und kann so in beliebiger Position relativ zum PC benutzt und nach Trennen von Verbindungsleitungen auch ganz entfernt werden, wie beschrieben wurde.

Bei der für die Verwendung in dem PC bevorzugten Ausführungsform des Druckers 2' ist die die Antriebs- und Steuerungsmodulanordnung tragende Schaltungsplatine 34' im vorderen Bereich des Gehäuseteils 4' angeordnet. Der abnehmbare Boden 32' überdeckt im wesentlichen auch nur den von der Schaltungsplatine 34' eingenommenen Bereich.

Die Hinterseite des unteren Gehäuseteils 4' ist offen. In die Öffnung 340 ist von hinten ein Einschub 342 einschiebbar, der aus einem L-förmigen Träger 344 besteht. Der untere L-Schenkel 346 schließt sich bei in das Gehäuseunterteil 4' eingeschobenem Einschub 342 (Fig. 5) an den Boden 32' an, so daß die Unterseite des unteren Gehäuseteils 4' vollständig verschlossen ist. Der aufrecht stehende zweite L-Schenkel 348 verschließt die hintere Öffnung 340.

Parallel zu dessen unterem L-Schenkel 346 ist auf dem Träger 344 eine Schaltungsplatine 350 angeordnet, die die für einen PC notwendigen elektronischen Baugruppen wie CPU, Speicher und Schnittstellenlogik trägt. Auf dieser Platine 350 ist über einen nicht dargestellten Rückwand-Bus-Stecker wenigstens eine weitere Platine 352 aufsteckbar, die elektronische Baugruppen für optional vorzusehende Funktionen trägt, wie z.B. den Anschluß an eine Datenfernübertragungseinrichtung oder ein Computer-Netzwerk.

Auf dem Träger 344 ist des weiteren ein Netzteil 354, Accumulatoren 356 für den netzunabhängigen Betrieb des PC, ein Festplattenlaufwerk 358 und wenigstens ein Aufnahmemodul 360 für eine steckbare, informationshaltende Speicher enthaltende Chipkarte 362 vorgesehen. An Stelle wenigstens eines Chipkarten-Aufnahmemoduls 360 kann auch ein Diskettenlaufwerk eingebaut werden. In einer Seitenwand 364 des unteren Gehäuseteils 4' befindet sich eine Klappe 368, nach deren Öffnung (in Fig. 2 punkt-strichliert dargestellt) auf die Chipkarte 362 bzw. die Diskette zugegriffen werden kann.

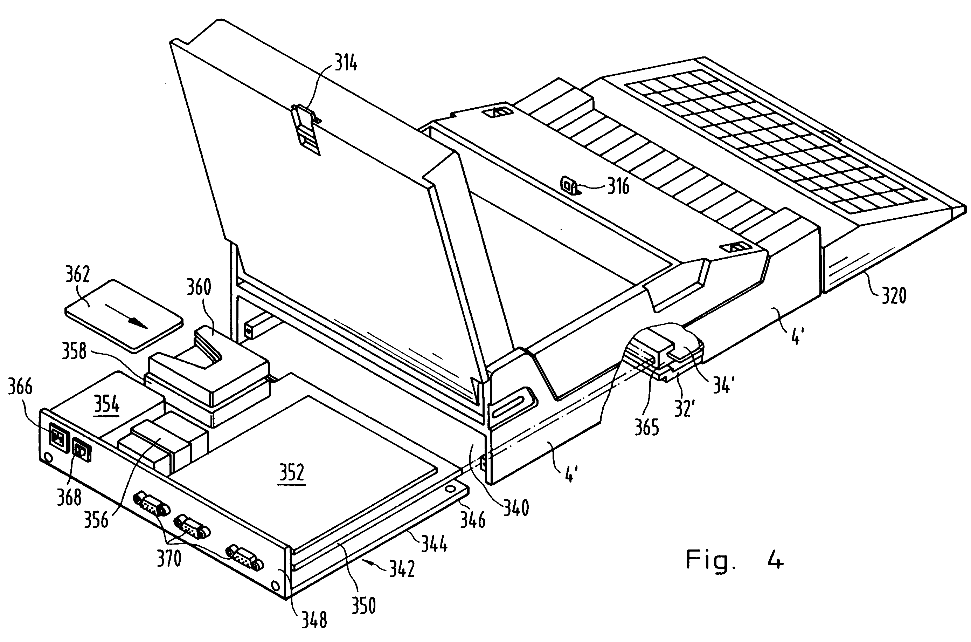

Die untere der Platinen 350, 352 ist über eine Randkantenstecker-Kupplung 365 mit der Schaltungsplatine 34' elektrisch verbunden (in Fig. 4 punkt-strichliert dargestellt).

Der aufrechte Schenkel 348 des Trägers 344 trägt eine Anschlußbuchse 366 für ein Netzkabel, einen Einschalter 368 sowie Anschlußstecker 370 für den Anschluß von Peripheriegeräten.

## Patentansprüche

1. Tragbarer Computer im Laptop-Format, umfassend ein Basisgehäuse mit einer Eingabetastatur, einem Bildschirm und einer Druckeranordnung, dadurch **gekennzeichnet**,
- daß das Basisgehäuse einen im wesentlichen parallel zu seiner Bodenseite verlaufenden, durchgehenden Transportkanal (3') mit einer im wesentlichen einer Kantenlänge des Basisgehäuses entsprechenden Breite für den Durchlauf eines Druckträgers hat, wobei auf einer Seite der Transportebene ein Druckkopf und auf der anderen Seite ein Druckwiderlager des Druckers (2') angeordnet sind, und
- daß die Eingabetastatur (320, 328) und/oder der Bildschirm (304, 306) als zwischen einer am Basisgehäuse anliegenden Außerbetriebsstellung und einer Betriebsstellung verstellbare Einheiten ausgebildet sind.

2. Tragbarer Computer nach Anspruch 1, dadurch **gekennzeichnet**, daß die Eingabetastatur (320, 328) zwischen einer oberhalb des Transportkanals (3') auf dem Basisgehäuse aufliegenden Außerbetriebsstellung und einer an dessen vorderer Bedienungsseite vor dem Basisgehäuse angeordneten Betriebsstellung schwenkbar am Basisgehäuse gelagert ist.

3. Tragbarer Computer nach einem der Ansprüche 1 bis 2, dadurch **gekennzeichnet**, daß der Bildschirm (304, 306) an dem der Bedienungsseite abgewandten hinteren Bereich des Basisgehäuses zwischen einer nach vorne auf das Basisgehäuse abgeklappten Außerbetriebsstellung und einer hochgeklappten Betriebsstellung schwenkbar am Basisgehäuse gelagert ist.

4. Tragbarer Computer nach einem der Ansprüche 1 bis 3, dadurch **gekennzeichnet**, daß die Eingabetastatur (320, 328) und/oder (304, 306) der Bildschirm vom Basisgehäuse abnehmbar und unabhängig von diesem aufstellbar ausgebildet sind, wobei sie jeweils über ein lösbares Verbindungskabel mit dem Druckergehäuse verbindbar sind.

5. Tragbarer Computer nach einem der Ansprüche 1 bis 4, dadurch **gekennzeichnet**, daß der Transportkanal (3') von der Bedienungsseite aus nach hinten verläuft.

6. Tragbarer Computer nach Anspruch 5, dadurch **gekennzeichnet**, daß der Transportkanal (3') eine im wesentlichen sich über die ganze Breite des Basisgehäuses erstreckende Breite hat.

7. Tragbarer Computer nach einem der Ansprüche 1 bis 6, dadurch **gekennzeichnet**, daß die Breite des Transportkanals (3') wenigstens 21 cm beträgt.

8. Tragbarer Computer nach einem der Ansprüche 1 bis 7, dadurch **gekennzeichnet**, daß die Druckeranordnung (2) ein Nadeldrucker mit einem quer zur Transportrichtung des Druckträgers beweglich gelagerten Nadeldruckkopf (14) ist.

9. Tragbarer Computer nach einem der Ansprüche 1 bis 8, **gekennzeichnet** durch ein in der Transportebene geteiltes Basisgehäuse mit einem unteren Gehäuseteil (4) und einem auf das untere Gehäuseteil (4) aufsetzbaren bzw. von diesem abhebbaren Gehäuseaufsatz (6), wobei das untere Gehäuseteil (4) eine erste Gruppe von Funktionsbauteilen mit dem in Druckzeilenrichtung verfahrbaren Druckkopf (14), unteren Druckträger-Transportrollen (16) und einer Farbbandanlage (20), jeweils mit ihren Antriebseinrichtungen, aufnimmt und im oberen Gehäuseaufsatz (6) eine zweite Gruppe von Funktionsbauteilen mit einem Druckwiderlager (22) und mit oberen Widerlagern (24) für die unteren Transportrollen (16) angeordnet ist.

10. Tragbarer Computer nach Anspruch 9, dadurch **gekennzeichnet**, daß die Widerlager für die unteren Transportrollen (16) als obere Transportrollen (22) ausgebildet sind, wobei den unteren und oberen Transportrollen (16, 22) jeweils Kupplungsmittel zugeordnet sind, die beim Aufsetzen des Gehäuseaufsatzes (6) miteinander in Kupplungseingriff kommen.

11. Tragbarer Computer nach Anspruch 9 oder 10, dadurch **gekennzeichnet**, daß im unteren Gehäuseteil (4) eine elektrische bzw. elektronische Antriebs- und Steuerungsmodulanordnung (34) für den Drucker vorgesehen ist, mit der im wesentlichen alle elektrischen und elektronischen Funktionsbauteile des Druckers (2) steckverbunden sind und daß eine ein Farbband (30) aufnehmende Farbbandkassette (26) auf die Oberseite des unteren Gehäuseteils (4) flach auflegbar ist, derart, daß ihre flache Oberseite (36) mit der Druckträgerebene bündig ist, wobei in der Farbbandkassette (26) angeordnete Transportrollen mit wenigstens einem durch die Auflagefläche (18a) für die Farbbandkassette (26) hindurchragenden Antriebszapfen (20) gekuppelt werden.

12. Tragbarer Computer nach Anspruch 11, dadurch **gekennzeichnet**, daß die Antriebs- und Steuerungsmodulanordnung (34) als über dem Boden (32) des unteren Gehäuseteils (4) angeordnete flache Schaltungsplatine (34) ausgebildet ist, auf der die zugeordneten Funktionsbauteile entsprechend ihren vorgesehenen räumlichen Anordnungen montiert sind.

13. Tragbarer Computer nach Anspruch 11 oder 12, dadurch **gekennzeichnet**, daß die Oberseite des unteren Gehäuseteils (4) durch eine im wesentlichen in der Druckträgerebene liegende Deckplatte (18) gebildet ist, die einen vertieften Bereich (18a) zur Aufnahme der Farbbandkassette (26) aufweist und die mit Durchbrechungen (38) für den Druckkopf (14), für in Einzugsrichtung (8) des Druckträgers vor bzw. hinter dem Druckkopf liegende Transportrollen (16), für die den Transportrollen (16) zugeordneten Kupplungsmittel sowie für wenigstens einen Antriebszapfen (20) für die Farbbandkassette (26) versehen ist.

14. Tragbarer Computer nach Anspruch 13, dadurch **gekennzeichnet**, daß die Durchbrechung (38) für den Druckkopf (14) in einem in Einzugsrichtung (8) hinteren, durch die eingelegte Farbbandkassette (26) nicht abgedeckten Bereich des vertieften **Be**reiches (18a) angeordnet ist.

15. Tragbarer Computer nach Anspruch 13 oder 14, dadurch **gekennzeichnet**, daß die Durchbrechungen (38) für die in Einzugsrichtung (8) vor dem Druckkopf (14) liegenden Transportrollen (16) in einem durch die eingelegte Farbbandkassette (26) abgedeckten Teil des vertieften Bereiches (18a) angeordnet sind und daß die Farbbandkassette (26) ihrerseits mit Durchbrechungen (40) für den Durchtritt dieser Transportrollen (16) versehen ist.

16. Tragbarer Computer nach einem der Ansprüche 11 bis 15, dadurch **gekennzeichnet**, daß die Farbbandkassette (26) mit bezüglich der Einzugsrichtung (8) des Druckträgers seitlichen Führungsstegen (26a, 26b) für die Seitenführung des Druckträgers versehen ist.

17. Tragbarer Computer nach einem der Ansprüche 9 bis 15, dadurch **gekennzeichnet**, daß der Gehäuseaufsatz (6) um eine quer zur Einzugsrichtung (8) des Druckträgers und parallel zur Druckträgerebene liegende Schwenkachse (10) schwenkbar mit dem unteren Gehäuseteil (4) verbunden ist.

18. Tragbarer Computer nach Anspruch 17, dadurch **gekennzeichnet**, daß der Gehäuseaufsatz (106) durch Federmittel (110) in die auf dem unteren Gehäuseteil (104) aufliegende Stellung vorbelastet ist.

19. Tragbarer Computer nach einem der Ansprüche 9 bis 18, dadurch **gekennzeichnet**, daß in den unteren Gehäuseteil (4') ein Einschub (342) mit den elektrischen und/oder elektronischen Bauteilen (350, 352, 354, 356, 358, 360, 362) des Computerteils einschiebbar ist, die einerseits mit der Antriebs- und Steuerungsmodulanordnung (34') des Druckers (2') und andererseits mit der Eingabetastatur (320, 328), dem Bildschirm (304, 306) sowie gegebenenfalls mit zugeordneten Peripheriegeräten verbindbar sind.

20. Tragbarer Computer nach Anspruch 19, dadurch **gekennzeichnet**, daß der Einschub (342) in eine in der Rückseite des Basisgehäuses angeordnete Einschuböffnung (340) einschiebbar ist.

21. Tragbarer Computer nach Anspruch 19 oder 20, dadurch **gekennzeichnet**, daß der Einschub (342) einen im Längsschnitt im wesentlichen L-förmigen Träger (344) mit einer Bodenwand (346) und einer die Einschuböffnung verschließenden Rückwand (348) umfaßt, wobei die Bodenwand in an den Seitenwänden des Basisgehäuses ausgebildete Führungsschienen eingreift.

22. Tragbarer Computer nach Anspruch 21, dadurch **gekennzeichnet**, daß der Einschub (342) eine oder mehrere, im wesentlichen zur Bodenwand (346) parallele Schaltungsplatinen (350, 352) trägt, wobei diese Schaltungsplatinen auf die Innenseite der mit Ausgangssteckern (366, 370) bestückten Rückwand (348) aufsteckbar sind und wobei an der der Rückwand (348) abgewandten Platinenkante jeweils Randkontakte angeordnet sind, welche beim Einschieben des Einschubes (342) mit im Basisgehäuse und/oder auf der Schaltungsplatine (34') angeordneten Steckverbindern (365) gekuppelt werden.

23. Tragbarer Computer nach einem der Ansprüche 19 bis 22, dadurch **gekennzeichnet**, daß der Einschub (342) einen Anschlußsteckverbinder (360) zum Stecken einer Massenspeicherkarte (362) aufweist.

24. Tragbarer Computer nach Anspruch 23, dadurch **gekennzeichnet**, daß in einer Seitenwand (364) des Basisgehäuses eine verschließbare Öffnung (368) zum Einsetzen und Entnehmen der Massenspeicherkarte (362) ausgebildet ist.

## Claims

1. Portable laptop computer, comprising a base housing with an input keyboard, a screen and a printer arrangement, characterised in that
- the base housing has a through transport channel (3') which extends essentially parallel to its bottom side and has a width corresponding essentially to a length of one edge of the base housing for the passage of a printing medium, a printing head being arranged on one side of the transport plane and a pressure abutment of the printer (2') being arranged on the other side, and
- in that the input keyboard (320, 328) and/or the screen (304, 306) are designed as units which can be adjusted between a non-operating position lying against the base housing and an operating position.

2. Portable computer according to Claim 1, characterised in that the input keyboard (320, 328) is mounted on the base housing so as to be pivotable between a non-operating position resting on the base housing above the transport channel (3') and an operating position arranged on the front operating side thereof in front of the base housing.

3. Portable computer according to one of Claims 1 to 2, characterised in that the screen (304, 306) is mounted on the base housing at the rear region of the base housing remote from the operating side so as to be pivotable between a non-operating position folded down forwards onto the base housing and a swung-up operating position.

4. Portable computer according to one of Claims 1 to 3, characterised in that the input keyboard (320, 328) and/or (304, 306) the screen are designed to be detachable from the base housing and can be set up independently of the latter, it being possible to connect them to the printer housing via a detachable connecting cable in each case.

5. Portable computer according to one of Claims 1 to 4, characterised in that the transport channel (3') runs towards the rear from the operating side.

6. Portable computer according to Claim 5, characterised in that the transport channel (3') has a width that extends essentially over the whole width of the base housing.

7. Portable computer according to one of Claims 1 to 6, characterised in that the width of the transport channel (3') is at least 21 cm.

8. Portable computer according to one of Claims 1 to 7, characterised in that the printer arrangement (2) is a dot matrix printer with a dot matrix printing head (14) mounted so as to be movable transversely to the direction of motion of the printing medium.

9. Portable computer according to one of Claims 1 to 8, characterised by a base housing divided in the transport plane with a lower housing part (4) and an upper housing part (6) that can be placed on, or lifted off from, the lower housing part (4), the lower housing part (4) accommodating a first group of function components with the printing head (14) which can be moved in the direction of the print lines, lower printing medium transport rollers (16), and a ribbon system (20), in each case with their drive apparatus, and there being arranged in the upper housing part (6) a second group of function components with a pressure abutment (22) and with upper abutments (24) for the lower transport rollers (16).

10. Portable computer according to Claim 9, characterised in that the abutments for the lower transport rollers (16) are designed as upper transport rollers (22), the lower and upper transport rollers (16, 22) being assigned coupling means in each case which engage with one another when the upper housing part (6) is put in place.

11. Portable computer according to Claim 9 or 10, characterised in that there is provided in the lower housing part (4) an electrical or electronic drive and control module arrangement (34) for the printer, to which essentially all electrical and electronic function components of the printer (2) are plug-connected, and in that it is possible to place a ribbon cassette (26) accommodating a ribbon (30) flat on the top side of the lower housing part (4), in such a way that its flat top side (36) is flush with the plane of the printing medium, transport rollers arranged in the ribbon cassette (26) being coupled to at least one drive journal (20) protruding through the bed surface (18a) for the ribbon cassette (26).

12. Portable computer according to Claim 11, characterised in that the drive and control module arrangement (34) is designed as a flat circuit board (34) arranged above the bottom (32) of the lower housing part (4), on which board the associated function components are mounted in accordance with their intended spatial arrangements.

13. Portable computer according to Claim 11 or 12, characterised in that the top side of the lower housing part (4) is formed by a cover plate (18) which lies essentially in the plane of the printing medium, has a recessed region (18a) for accommodating the ribbon cassette (26), and which is provided with apertures (38) for the printing head (14), for transport rollers (16) situated in front of or behind the printing head in the insertion direction (8) of the printing medium, for the coupling means assigned to the transport rollers (16), and for at least one drive journal (20) for the ribbon cassette (26).

14. Portable computer according to Claim 13, characterised in that the aperture (38) for the printing head (14) is arranged in a part of the recessed region (18a) to the rear in the insertion direction (8) and not covered by the inserted ribbon cassette (26).

15. Portable computer according to Claim 13 or 14, characterised in that the apertures (38) for the transport rollers (16) situated in front of the printing head (14) in the insertion direction (8) are arranged in a part of the recessed region (18a) covered by the inserted ribbon cassette (26), and in that the ribbon cassette (26) is in turn provided with apertures (40) for the passage of said transport rollers (16).

16. Portable computer according to one of Claims 11 to 15, characterised in that the ribbon cassette (26) is equipped with lateral guide bars (26a, 26b) with respect to the insertion direction (8) of the printing medium for the lateral guidance of the printing medium.

17. Portable computer according to one of Claims 9 to 15, characterised in that the upper housing part (6) is connected to the lower housing part (4) in such a way that it can be pivoted about an axis of rotation (10) transverse to the insertion direction (8) of the printing medium and parallel to the plane of the printing medium.

18. Portable computer according to Claim 17, characterised in that the upper housing part (106) is pretensioned in its position resting on the lower housing part (104) by spring means (110).

19. Portable computer according to one of Claims 9 to 18, characterised in that a board (342) with the electrical and/or electronic components (350, 352, 354, 356, 358, 360, 362) of the computer part can be inserted into the lower housing part (4'), which board can be connected on the one hand to the drive and control module arrangement (34') of the printer (2') and on the other hand to the input keyboard (320, 328), the screen (304, 306), and if appropriate also to associated peripheral devices.

20. Portable computer according to Claim 19, characterised in that the board (342) can be inserted into a board opening (340) arranged in the rear side of the base housing.

21. Portable computer according to Claim 19 or 20, characterised in that the board (342) comprises an essentially L-shaped rack (344) in longitudinal section with a bottom wall (346) and a backplane (348) closing off the board opening, the bottom wall engaging into guide rails formed on the side walls of the base housing.

22. Portable computer according to Claim 21, characterised in that the board (342) carries one or more circuit boards (350, 352) essentially parallel to the bottom wall (346), it being possible to plug said circuit boards into the inside of the backplane (348) equipped with output connectors (366, 370), and there being arranged in each case on the board edge remote from the backplane (348) edge contacts which are coupled with plug connectors (365) arranged in the base housing and/or on the circuit board (34') when the board (342) is pushed in.

23. Portable computer according to one of Claims 19 to 22, characterised in that the board (342) has an interface connector (360) for plugging in a mass storage card (362).

24. Portable computer according to Claim 23, characterised in that a closable opening (368) is formed in a side wall (364) of the base housing for the insertion and removal of the mass storage card (362).

## Revendications

1. Ordinateur portable réalisé selon le format de Laptop, comprenant un boîtier de base comportant un clavier d'entrée, un écran et un dispositif d'imprimante, caractérisé par le fait
- que le boîtier de base possède un canal continu de transport (3'), qui s'étend essentiellement parallèlement à la partie de fond du boîtier et possède une largeur, qui correspond essentiellement à une longueur d'arête du boîtier de base, pour le passage d'un support d'impression, une tête d'impression étant disposée d'un côté du plan de transport tandis qu'une butée d'impression de l'imprimante (2') est disposée de l'autre côté de ce plan,
- que le clavier d'entrée (320, 328) et/ou l'écran (304, 306) sont réalisés sous la forme d'unités déplaçables entre une position hors service, dans laquelle elles sont appliquées contre le boîtier de base, et une position de service.

2. Ordinateur portable suivant la revendication 1, caractérisé par le fait que le clavier d'entrée (320, 328) est monté sur le boîtier de base de manière à pouvoir basculer entre une position hors service, dans laquelle il est appliqué contre le boîtier de base au-dessus du canal de transport (3'), et une position de service, dans laquelle il est disposé en avant du boîtier de base sur le côté avant de commande du boîtier.

3. Ordinateur portable suivant l'une des revendications 1 à 2, caractérisé par le fait que l'écran (304, 306) est monté dans la partie arrière du boîtier de base, tournée à l'opposé du côté de commande, de manière à pouvoir basculer entre une position hors service, dans laquelle il est rabattu vers l'avant sur le boîtier de base, et une position de service, dans laquelle il est relevé.

4. Ordinateur portable suivant l'une des revendications 1 à 3, caractérisé par le fait que le clavier d'entrée (320, 328) et/ou l'écran (304, 306) sont agencés de manière à pouvoir être amovible du boîtier de base et de manière à pouvoir être monté de façon indépendante de ce dernier, et ils sont reliés au boîtier de l'imprimante respectivement par l'intermédiaire d'un câble de liaison amovible.

5. Ordinateur portable suivant l'une des revendications 1 à 4, caractérisé par le fait que le canal de transport (3') s'étend vers l'arrière à partir du côté de commande.

6. Ordinateur portable suivant la revendication 5, caractérisé par le fait que le canal de transport (3') possède une largeur qui correspond sensiblement à la largeur complète du boîtier de base.

7. Ordinateur portable suivant l'une des revendications 1 à 6, caractérisé par le fait que la largeur du canal de transport (3') est égale au moins à 21 cm.

8. Ordinateur portable suivant l'une des revendications 1 à 7, caractérisé par le fait que le dispositif d'imprimante (2) est une imprimante à aiguilles possédant une tête d'impression à aiguilles (14) montée de manière à être déplaçable transversalement par rapport à la direction de transport du support d'impression.

9. Ordinateur portable suivant l'une des revendications 1 à 8, caractérisé par un boîtier de base qui est divisé dans le plan de transport et comporte une partie inférieure (4) et un capot (6) qui peut être appliqué sur la partie inférieure (4) du boîtier ou en être écartée, la partie inférieure (4) du boîtier logeant un premier groupe de composants fonctionnels équipés de la tête d'impression (14) déplaçable dans la direction des lignes d'impression, des galets de transport inférieurs (16) du support d'impression et une installation à ruban encreur (20), avec respectivement leurs dispositifs d'entraînement, et que dans le capot supérieur (6) du boîtier est disposé un second groupe de composants fonctionnels possédant une butée d'impression (22) et des butées supérieures (24) pour les galets de transport inférieurs (16).

10. Ordinateur portable suivant la revendication 9, caractérisé par le fait que les butées pour les galets de transport inférieurs (16) sont réalisées sous la forme de galets de transport supérieurs (22), et aux galets de transport inférieurs et supérieurs (16, 22) sont associés respectivement des moyens d'accouplement qui, lors de la mise en place du capot (6) du boîtier, coagissent mutuellement à l'état accouplé.

11. Ordinateur portable suivant la revendication 9 ou 10, caractérisé par le fait que dans la partie inférieure (4) du boîtier est prévu un dispositif de module électrique ou électronique d'entraînement et de commande (34) pour l'imprimante, au moyen duquel essentiellement tous les composants fonctionnels électriques et électroniques de l'imprimante (2) sont réunis par enfichage, et qu'une cassette à ruban encreur (26), qui contient un ruban encreur (30), peut être montée à plat sur la face supérieure de la partie inférieure (4) du boîtier de sorte que sa face supérieure plane (36) est de niveau avec le plan du support d'impression, des galets de transport disposés dans la cassette à ruban encreur (36) étant accouplés à au moins un téton d'entraînement (20) qui traverse la surface d'application (18a) pour la cassette à ruban encreur (26).

12. Ordinateur portable suivant la revendication 11, caractérisé par le fait que le dispositif de module d'entraînement et de commande (34) est réalisé sous la forme d'une platine porte-circuits plate (34), disposée au-dessus du fond (32) de la partie inférieure (4) du boîtier et sur laquelle les composants fonctionnels associés sont montés en fonction de leurs dispositions spatiales prévues.

13. Ordinateur portable suivant la revendication 11 ou 12, caractérisé par le fait que la face supérieure de la partie inférieure (4) du boîtier est formée par une plaque de revêtement (18), qui est située sensiblement dans le plan du support d'impression et qui possède une zone en renfoncement (18a) servant à loger la cassette à ruban encreur (26) et comporte des passages (38) pour la tête d'impression (14), pour des galets de transport (16) situés dans la direction de tirage (8) du support d'impression en avant ou en arrière de la tête d'impression, pour les moyens d'accouplement associés aux galets de transport (16) ainsi que pour au moins un téton d'entraînement (20) pour la cassette à ruban encreur (26).

14. Ordinateur portable suivant la revendication 13, caractérisé par le fait que le passage (38) pour la tête d'impression (14) est disposé dans une partie arrière, considérée dans la direction d'introduction (8) et non recouverte par la cassette à ruban encreur (26) insérée, de la zone en renfoncement (18a).

15. Ordinateur portable suivant la revendication 13 ou 14, caractérisé par le fait que les passages (38) pour les galets de transport (16) situés en amont de la tête d'impression (14) dans la direction d'introduction (8), sont disposés dans une partie, qui est recouverte par la cassette à ruban encreur (26) insérée, de la zone en renfoncement (18a), et que la cassette à ruban encreur (26) est pourvue, pour sa part, de passages (40) pour le passage de ces galets de transport (16).

16. Ordinateur portable suivant l'une des revendications 11 à 15, caractérisé par le fait que la cassette à ruban encreur (26) est pourvue de barrettes de guidage (26a, 26b), qui sont latérales par rapport à la direction d'introduction (8) du support d'impression, pour le guidage latéral de ces derniers.

17. Ordinateur portable suivant l'une des revendications 9 à 15, caractérisé par le fait que le capot (6) du boîtier est relié à la partie inférieure (4) du boîtier de manière à pouvoir basculer autour d'un axe de basculement (10) qui s'étend transversalement par rapport à la direction d'introduction (8) du support d'impression et parallèlement au plan du support d'impression.

18. Ordinateur portable suivant la revendication 17, caractérisé par le fait que le capot (106) du boîtier est précontraint par des moyens formant ressorts (110), dans la position dans laquelle il est appliqué sur la partie inférieure (104) du boîtier.

19. Ordinateur portable suivant l'une des revendications 9 à 18, caractérisé par le fait que dans la partie inférieure (4') du boîtier peut être introduit un tiroir (342) comportant les composants électriques et/ou électroniques (350, 352, 354, 356, 358, 360, 362) de la partie formant ordinateur, qui peuvent être réunis, d'une part, au dispositif de module d'entraînement et de commande (34') de l'imprimante (2'), et, d'autre part, au clavier d'entrée (320, 328) de l'écran (304, 306) ainsi que, éventuellement, à des appareils périphériques associés.

20. Ordinateur portable suivant la revendication 19, caractérisé par le fait que le tiroir (342) peut être inséré dans une ouverture d'insertion (340) ménagée dans la face arrière du boîtier de base.

21. Ordinateur portable suivant la revendication 19 ou 20, caractérisé par le fait que le tiroir (342) comporte un support (344) essentiellement en forme de L en coupe longitudinale, possédant une paroi de fond (346) et une paroi arrière (348) qui ferme l'ouverture d'insertion, la paroi de fond s'engageant dans des rails de guidage formés dans les parois latérales du boîtier de base.

22. Ordinateur portable suivant la revendication 21, caractérisé par le fait que l'insert (342) porte une ou plusieurs platines porte-circuits (350, 352), qui sont sensiblement parallèles à la paroi de fond (346), ces platines porte-circuits pouvant être emmanchées sur la face intérieure de la paroi arrière (348) équipée des connecteurs de sortie (366, 370), tandis que sur le bord des platines, tourné à l'opposé de la paroi arrière (348), sont disposés respectivement des contacts marginaux, qui, lors de l'insertion du tiroir (342), sont accouplés à des connecteurs (365) disposés dans le boîtier de base et/ou sur la platine porte-circuits (34').

23. Ordinateur portable suivant l'une des revendications 19 à 22, caractérisé par le fait que le tiroir (342) possède un connecteur de raccordement (360) pour le raccordement d'une carte à mémoire de masse (362).

24. Ordinateur portable suivant la revendication 22, caractérisé par le fait qu'une ouverture (368) pouvant être fermée et permettant l'insertion et le retrait de la carte à mémoire de masse (362), est ménagée dans une paroi latérale (364) du boîtier de base.
